# EUROPÄISCHE PATENTANMELDUNG

(11) **EP 1 167 879 A1**
(43) Veröffentlichungstag der Anmeldung: **02.01.2002**
(21) Anmeldenummer: 01114198.3
(22) Anmeldetag: 12.06.2001
(51) Int. Cl.: F23D 14/66, F23D 14/16

(54) **Rekuperativer Brenner mit Gasleitvorrichtung**

(30) Priorität: 20.06.2000 DE 10042761
(71) Anmelder: ROBERT BOSCH GMBH, 70442 Stuttgart (DE)
(72) Erfinder: Daniel, Walter, 3900 Brig (CH)

(57) **Zusammenfassung**

Es wird ein Brenner mit einer Abgaswärmerückgewinnung nach dem Prinzip eines Gegenstromwärmetauschers vorgeschlagen, der einen Brennerkörper (10) und einer Brennkammer (11) aufweist. Dabei sind innerhalb des Brennerkörpers (10) verlaufende, mit der Brennkammer (11) in Verbindung stehende, insbesondere parallele Kanäle (12, 30, 31, 32, 34) vorgesehen, von denen ein erster Teil als gasführende, zu der Brennkammer (11) hin verlaufende Gaszufuhrkanäle (31, 32) und ein zweiter Teil als abgasführende, von der Brennkammer (11) weg verlaufende Abgasabfuhrkanäle (30) einsetzbar ist. Weiter steht der Brennerkörper (10) mit einer Gasleitvorrichtung (21) in Verbindung, die derart ausgebildet ist, dass sie den Kanälen (12, 30, 31, 32, 34) deren Funktion hinsichtlich Gaszufuhr und Abgasabfuhr einzuprägen vermag.

## Beschreibung

Die Erfindung betrifft einen Brenner mit Abgaswärmerückgewinnung nach dem Prinzip eines Gegenstromwärmetauschers nach der Gattung des Hauptanspruches.

### Stand der Technik

Rekuperative Brenner, insbesondere Strahlungsbrenner, mit einer Abgaswärmerückgewinnung nach dem Prinzip eines Gegenstromwärmetauschers sind bekannt. So wurde beispielsweise in der Anmeldung DE 198 60 460.2 bereits ein derartiger Brenner vorgeschlagen, wobei der Brennerkörper einen keramischen Wabenkörper aufweist, der von einer Vielzahl von parallel verlaufenden, schachbrettartig angeordneten feinen Kanälen durchzogen ist. Weiter ist der dort vorgeschlagene keramische Wabenkörper auf der dem Brennraum abgewandten Seite durch geeignete Ausnehmungen und definierte Abdeckungen einzelner Kanäle derart strukturiert, dass einzelne der Kanäle als Abgasabfuhrkanäle ausgebildet sind, während andere als Brennstoffzufuhrkanäle bzw. Luftzufuhrkanäle dienen.

Bei einem derartigem keramischen Wabenkörper ist jedoch nachteilig, dass die Funktion der Kanäle bereits durch die Fertigung des keramischen Wabenkörpers als Brennerkörper fest vorgegeben ist, und sich überdies die dort vorgeschlagene feste Zuordnung der einzelnen Kanäle zu einer bestimmten Funktion (Abgasabfuhr, Luftzufuhr oder Brennstoffzufuhr) nur für Brennerkörper eignet, bei denen die Kanäle im Querschnitt des Brennerkörpers einem regelmäßigen geometrischen Muster, insbesondere in Form einer schachbrettartigen Anordnung, unterworfen sind.

Aufgabe der vorliegenden Erfindung war, einen rekuperativen Brenner bereitzustellen, bei dem der mit einer Vielzahl von Kanälen durchzogene Brennerkörper eine weitgehend beliebige Form aufweisen kann, und bei dem insbesondere die Anordnung der Kanäle in dem Brennerkörper keinem regelmäßigen geometrischen Muster unterworfen ist.

### Vorteile der Erfindung

Der erfindungsgemäße Brenner mit einer Abgaswärmerückgewinnung nach dem Prinzip eines Gegenstromwärmetauschers hat gegenüber dem Stand der Technik den Vorteil, dass die in dem Brennerkörper verlaufenden Kanäle im Querschnitt des Brennerkörpers eine ungeordnete, insbesondere keinem regelmäßigen geometrischen Muster unterworfene Struktur aufweisen müssen. Dabei ist gleichzeitig gewährleistet, dass die Führung der zugeführten Verbrennungsluft des Brenngases und des Abgases in definierter Weise innerhalb des Brennerkörpers erfolgt, wobei durch die Gasleitvorrichtung die funktionelle Zuordnung der einzelnen Kanäle in dem Brennerkörper hinsichtlich Gaszufuhr bzw. Abgasabfuhr vorgenommen wird.

Somit ist es möglich, die separate Führung der Verbrennungsluft, des Brenngases und des Abgases in benachbarten Kanälen des bevorzugt in Form eines keramischen oder metallischen Wabenkörpers ausgeführten Brennerkörpers zu gewährleisten, wobei sich als Wabenkörper neben quaderförmigen oder zylindrischen Monolithen im Querschnitt auch weitgehend beliebige Brennerkörper eignen.

Durch die Gasleitvorrichtung wird erreicht, dass der eigentliche Brennerkörper nicht zur Festlegung der Funktion der einzelnen Kanäle modifiziert bzw. mit fest vorgegebenen Füllungen, Abdichtungen oder Ausnehmungen der einzelnen Kanäle versehen werden muss. Insofern eignen sich für den erfindungsgemäßen Brenner auch übliche Brennerkörper oder Wabenkörper, wie sie beispielsweise aus der Herstellung von Abgaskatalysatoren in Kraftfahrzeugen bekannt sind, ohne dass diese einer speziellen verfahrenstechnischen Nachbehandlung unterzogen oder in einem aufwendigen Herstellungsverfahren hergestellt werden müssen. Insbesondere ist es nun nicht mehr erforderlich, dass der Brennerkörper in einer speziellen Weise an die Gasleitvorrichtung angepasst ist, da die Gasleitvorrichtung aufgrund ihrer speziellen Struktur den einzelnen Kanälen in dem Brennerkörper ihre jeweils gewünschte, spezielle Funktion aufprägt.

Vorteilhafte Weiterbildungen der Erfindung ergeben sich aus den in den Unteransprüchen genannten Maßnahmen.

So kann mittels der Gasleitvorrichtung wahlweise innerhalb des Brennerkörpers sowohl eine Aufteilung der Kanäle in abgasführende Kanäle und ein Brennstoff-Luft-Gemisch führende Kanäle als auch in abgasführende Kanäle, luftführende Kanäle und brenngasführende Kanäle vorgenommen werden.

Darüber hinaus ist vorteilhaft, dass die eingesetzte Gasleitvorrichtung von dem Brennerkörper abnehmbar und insbesondere auf der der Brennkammer abgewandten Seite des Brennerkörpers auf dem Brennerkörper aufgesetzt ist. Somit ist gewährleistet, dass die Gasleitvorrichtung je nach Bedarf bzw. Einzelfall an die Anforderungen des Brenners angepasst werden kann.

Zur Realisierung der eingesetzten Gasleitvorrichtung bestehen vorteilhaft eine Vielzahl von Möglichkeiten. So kann die Gasleitvorrichtung einerseits aus einer Mehrzahl von benachbarten Einzelelementen in Form von quaderförmigen Abgasabfuhrelementen und Gaszufuhrelementen bestehen, die zu einem Block zusammengefasst und auf dem Brennerkörper aufgesetzt sind. Durch innerhalb dieser Gaszufuhrelemente bzw. Abgasabfuhrelemente in definierter Weise angebrachte Ausnehmungen, und mit diesen Ausnehmungen in definierter Weise verbundene geöffnete Bohrungen läßt sich dann eine definierte Gaszufuhr zu einzelnen Kanälen in dem Brennerkörper bzw. eine definierte Abgasabfuhr von einzelnen der Kanäle in dem Brennerkörper erreichen. Weiter ist dabei vorteilhaft, dass die Gaszufuhrelemente auch in Luftzufuhrelemente und Brennstoffzufuhrelemente unterteilt werden können, so dass sich eine Unterscheidung der innerhalb des Brennerkörpers bevorzugt parallel verlaufenden Kanäle hinsichtlich Abgasabfuhrkanälen, Luftzufuhrkanälen und Brenngaszufuhrkanälen ergibt.

Die Ausnehmungen in den einzelnen Abgasabfuhrelementen bzw. Gaszufuhrelementen sind vorteilhaft derart ausgebildet, dass mehrere Kanäle innerhalb des Brennerkörpers zu Zeilen mit gleicher Funktion zusammengefasst sind.

Alternativ ist es möglich, dass die Abgasabfuhrelemente bzw. die Gaszufuhrelemente eine ringförmige Grundstruktur aufweisen und derart benachbart auf dem Brennerkörper angeordnet sind, dass eine periodische Abfolge von ringförmigen Gaszufuhrbereichen und Abgasabfuhrbereichen entsteht, wobei ein Abgasabfuhrelement, abgesehen von Randbereichen der Gasleitvorrichtung, bevorzugt stets von zwei Gaszufuhrelementen benachbart ist.

Um zu gewährleisten, dass die durch die aufgesetzte Gasleitvorrichtung hinsichtlich ihrer Funktion definierten Kanäle zumindest weitgehend gasdicht voneinander getrennt sind, so dass die Abgasabfuhrkanäle keine Luft bzw. kein Brenngas führen, und andererseits die Luft bzw. Brenngas führenden Kanäle kein Abgas führen, ist es weiter vorteilhaft, wenn die von den Gaszufuhrelementen bzw. Abgasabfuhrelementen definierten schlitzförmigen, zeilenförmigen oder ringförmigen Gaszufuhrbereiche bzw. Abgasabfuhrbereiche über Trennwände bzw. Trennstege zumindest weitgehend gasdicht voneinander getrennt sind. Dabei weisen diese Trennwände bzw. Trennstege eine Breite auf, die größer oder gleich der größten Weite der Kanäle in dem Brennerkörper ist. Auf diese Weise ist sichergestellt, dass die Breite der Gaszufuhrelemente und die Breite der Abgasabfuhrelemente stets größer als die größte Weite der Kanäle innerhalb des Brennerkörpers ist, so dass einem Kanal innerhalb des Brennerkörpers nicht zwei unterschiedliche Gase, das heißt Abgas und gleichzeitig Luft und/oder Brenngas, zugeführt werden.

Neben der Ausbildung der Gasleitvorrichtung in Form einer Mehrzahl von in Form eines Blockes zusammengefassten, periodisch abwechselnden Gaszufuhrelementen bzw. Abgasabfuhrelementen kann die Gasleitvorrichtung auch in Form einer einstückigen oder mehrstückigen, auf der Stirnseite des Brennerkörpers aufgesetzten Gasleitscheibe oder Gasleitplatte ausgebildet sein. Dabei wird durch die Struktur dieser Gasleitplatte bzw. der Gasleitscheibe den Kanälen innerhalb des Brennerkörpers ihre jeweilige Funktion aufgeprägt.

### Zeichnungen

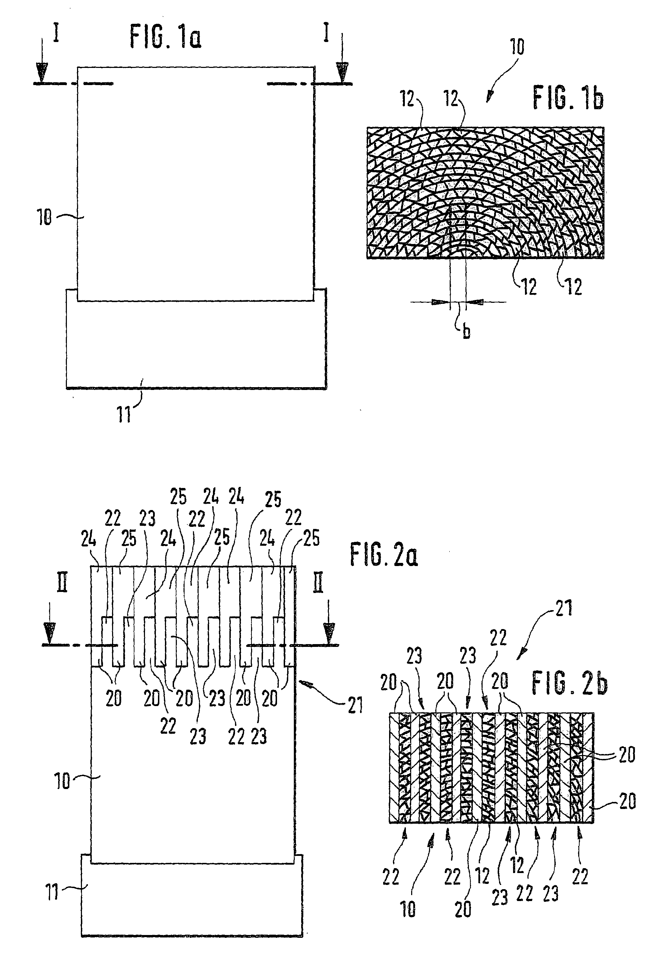

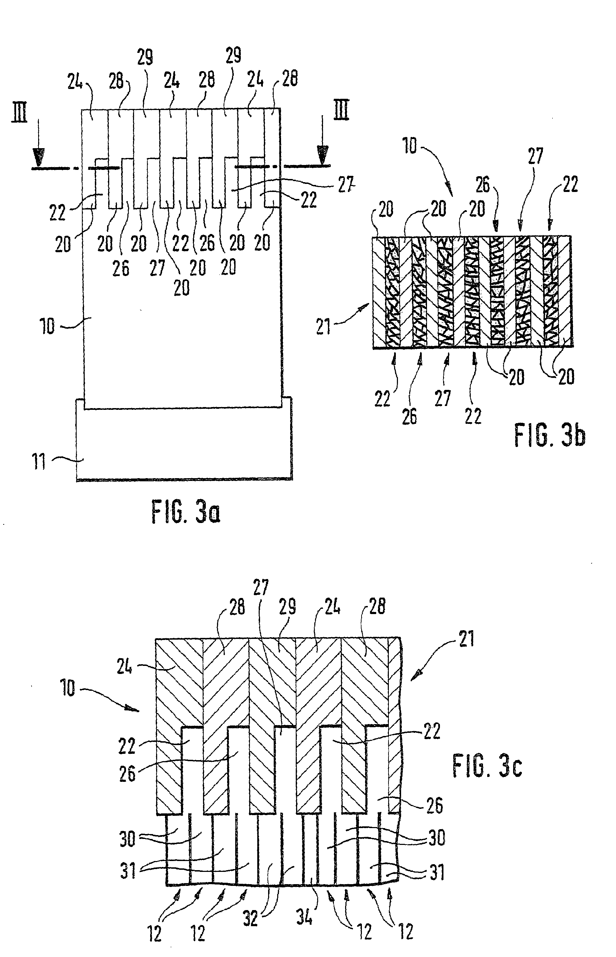

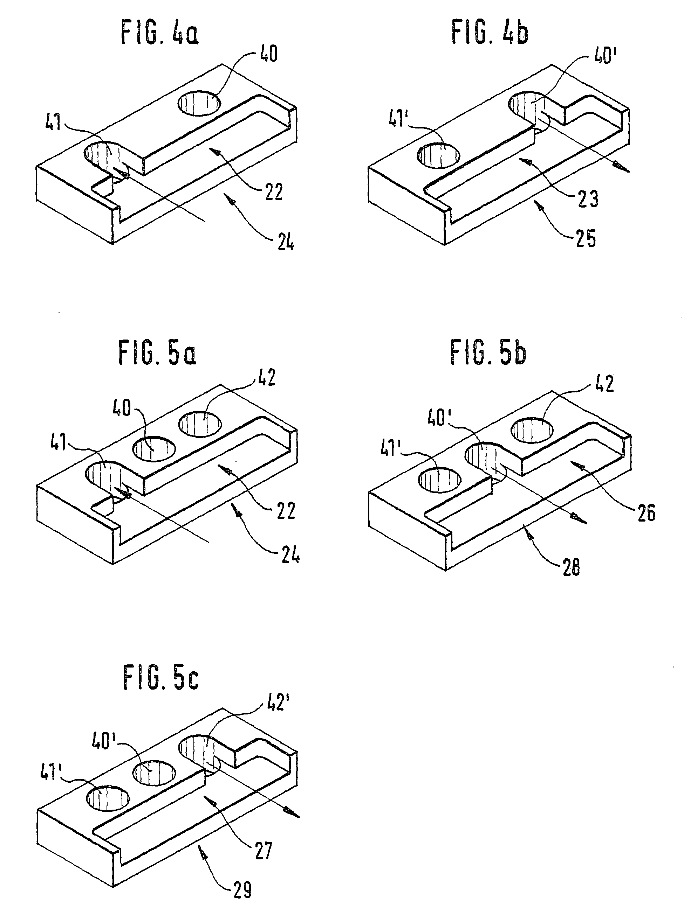

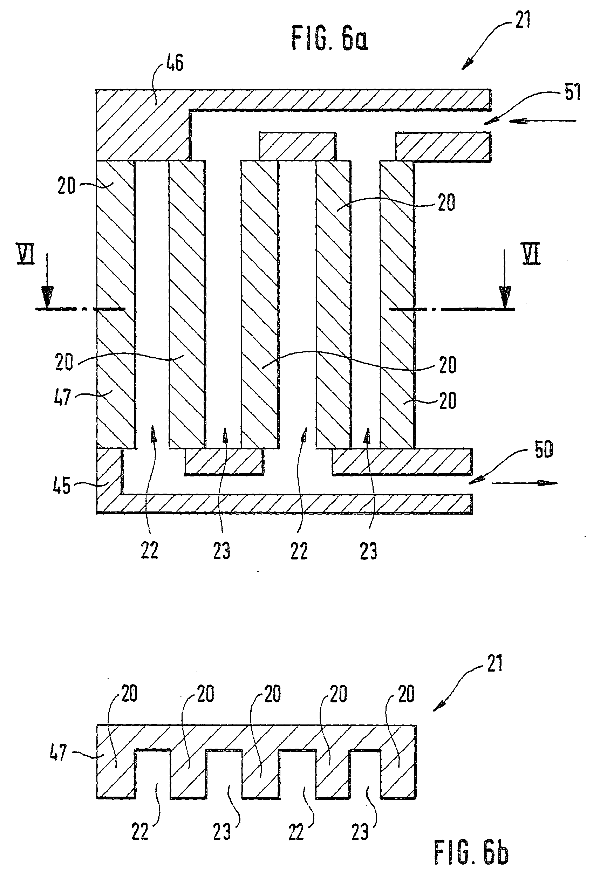

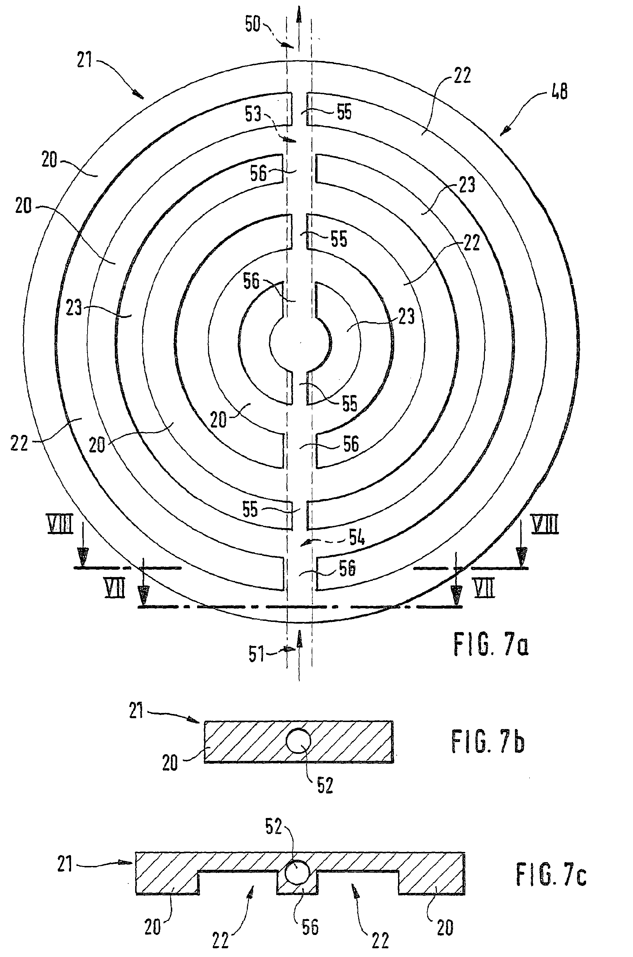

Die Erfindung wird anhand der Zeichnungen und in den nachfolgenden Beschreibung näher erläutert. Es zeigen Figur 1a eine Prinzipskizze eines Brenners mit einem Brennerkörper und einer Brennkammer in Seitenansicht, Figur 1b einen Schnitt durch den Brennerkörper in Figur 1a nach der Linie I-I, Figur 2a den Brenner gemäß Figur 1a mit einer zusätzlich aufgesetzten Gasleitvorrichtung, Figur 2b einen Schnitt durch die aufgesetzte Gasleitvorrichtung in Figur 2a nach der Linie II-II, Figur 3a eine alternative Ausführungsform zur Figur 2a, Figur 3b einen Schnitt durch die Gasleitvorrichtung in Figur 3a nach der Linie III-III und Figur 3c einen Ausschnitt der Figur 3a mit innerhalb des Brennerkörpers verlaufenden Kanälen. Die Figuren 4a, 4b, 5a, 5b und 5c zeigen jeweils einzelne Elemente der Gasleitvorrichtung, Figur 6a eine alternative Ausführungsform der Gasleitvorrichtung in brennerkörperseitiger Draufsicht und Figur 6b einen Schnitt entlang der Linie VI-VI in Figur 6a. Die Figuren 7a bis 7c zeigen ein weiteres Ausführungsbeispiel einer Gasleitvorrichtung in Form einer einstückigen Gasleitplatte, wobei Figur 7a die Gasleitplatte in brennerkörperseitiger Draufsicht, Figur 7b einen ersten Schnitt durch Figur 7a entlang der Linie VII-VII und Figur 7c einen Schnitt durch Figur 7a entlang der Linie VIII-VIII zeigt.

### Ausführungsbeispiele

Die Erfindung geht zunächst aus von einem Rekuperatorbrenner, wie er in ähnlicher Form bereits in der Anmeldung DE 198 60 460.2 beschrieben worden ist. Dieser Brenner wird hinsichtlich des Brennerkörpers in Form eines keramischen Wabenkörpers und hinsichtlich einer zusätzlichen Gasleitvorrichtung zur Organisation der Gaszufuhr zu der Brennkammer und der Abgasabfuhr aus der Brennkammer modifiziert.

Der in Figur 1a und Figur dargestellte Brennerkörper 10 ist beispielsweise in Form eines quaderförmigen Monolithen ausgebildet, der eine Vielzahl von parallel zueinander verlaufenden Kanälen 12 aufweist, die im Querschnitt eine ungeordnete, insbesondere keinem regelmäßigen geometrischen Muster unterworfene Struktur aufweisen. In Figur 1b ist weiter die größte Weite der Kanäle 12 eingezeichnet und mit b bezeichnet. Insgesamt ist der Brennerkörper 10 ein an sich bekannter, keramischer Wabenkörper in Form eines quaderförmigen Monolithen mit einer Vielzahl von gasdurchgängigen Kanälen 12, wie er beispielsweise aus der Herstellung von Abgaskatalysatoren in Kraftfahrzeugen bekannt ist. Um nun den Kanälen 12 gemäß Figur 1b eine definierte Funktion hinsichtlich Gaszufuhr und Abgasabfuhr in dem Brennerkörper 10 einzuprägen, ist gemäß Figur 2 dargestellt, wie auf der der Brennkammer 11 abgewandten Stirnseite des Brennerkörpers 10 eine Gasleitvorrichtung 21 aufgesetzt ist, die zumindest weitgehend gasdicht mit dem Brennerkörper 10 verbunden ist.

Die Gasleitvorrichtung 21 besteht dabei aus einem Block der aus einer Vielzahl von unmittelbar benachbarten Einzelelementen zusammengesetzt ist, die jeweils eine quaderförmige Grundstruktur aufweisen. Im Einzelnen besteht die Gasleiteinrichtung 21 gemäß Figur 2a aus einer Vielzahl von Abgasabfuhrelementen 24 und Gaszufuhrelementen 25, die abwechselnd periodisch hintereinander angeordnet sind. Jedes dieser Gaszufuhrelemente 25 bzw. Abgasabfuhrelemente 24 weist weiter je nach Funktion einen diesem zugeordneten Abgasabfuhrbereich 22 bzw. zugeordneten Gaszufuhrbereich 23 in Form einer Ausnehmung aus dem Abgasabfuhrelement 24 bzw. dem Gaszufuhrelement 25 auf. Die Ausnehmungen bilden entsprechend ihrer Funktion zur Gaszufuhr bzw. Abgasabfuhr die in den Figuren 2a, 3a, 3c und 6a im Schnitt dargestellten Gaszufuhrbereiche 23, 27, 26 und Abgasabfuhrbereiche 22 aus. Weiter ist gemäß Figur 2a vorgesehen, dass die einzelnen Gaszufuhrelemente bzw. Abgasabfuhrelemente 25, 24 zumindest weitgehend gasdicht mittels Trennwänden bzw. Trennstegen 20 voneinander isoliert sind. Dies wird mit Hilfe der Figur 2b näher erläutert. Dabei ist erkennbar, wie die Trennstege 20 die Stirnseite des Brennerkörpers 10 zeilenförmig abdecken, und wie dazwischen jeweils abwechselnd über die Abgasabfuhrbereiche 22 bzw. die benachbarten Gaszufuhrbereiche 23 die Kanäle 12 des Brennerkörpers 10 zugänglich sind. Durch den Aufbau der Gasleitvorrichtung 21 gemäß Figur 1b wird somit erreicht, dass den Kanälen 12 trotz deren ungeordneter Struktur jeweils definiert eine Funktion hinsichtlich Gaszufuhr und Abgasabfuhr eingeprägt wird. So werden die jeweiligen Kanäle 12 gemäß Figur 1b, die über die Abgasabfuhrbereiche 22 zugänglich sind, nunmehr als Abgasabfuhrkanäle 30 eingesetzt, während diejenigen Kanäle 12, die über die Gaszufuhrbereiche 23 zugänglich sind, nunmehr als Gaszufuhrkanäle dienen.

Die konkrete Form eines Abgasabfuhrelementes 24 ist in Figur 4a noch einmal verdeutlicht. Daraus ist erkennbar, dass zunächst ein langgestreckter Quader mit einer Ausnehmung in Form des Abgasabfuhrbereiches 22 versehen wird. Anschließend wird das Abgasabfuhrelement 24 mit einer geöffneten ersten Bohrung 41 und einer geschlossenen zweiten Bohrung 40 versehen, wobei unter einer geöffneten Bohrung eine Bohrung zu verstehen ist, die einen Gasdurchgang zwischen dem Bohrloch und dem Abgasabfuhrbereich 22 erlaubt. Die Figur 4b erläutert dann ein analog aufgebautes Gaszufuhrelement 25 mit einem Gaszufuhrbereich 23, bei dem lediglich die erste Bohrung 41' in Form einer geschlossenen Bohrung und die zweite Bohrung in Form einer geöffneten zweiten Bohrung 40' mit Gasdurchgang zu dem Gaszufuhrbereich 23 ausgeführt ist.

Aus diesen Elementen 24, 25 gemäß Figur 4a bzw. Figur 4b wird nun die Gasleitvorrichtung 21 zusammengesetzt, wobei die Bohrungen 40, 40' und die Bohrungen 41, 41' jeweils in einer Flucht liegen und somit jeweils eine gasdurchgängige Röhre bilden. Weiter sind diese Bohrungen 40, 40', entsprechend der Darstellung in Figur 6a, mit einer nicht dargestellten Gaszuführung 51 in Verbindung, während die Bohrungen 41, 41' mit einer nicht dargestellten Abgasabführung 50 verbunden sind. Im Übrigen werden sowohl die Abgasabfuhrelemente 24 als auch die Gaszufuhrelemente 25 bevorzugt aus einem Metall gefertigt.

Insgesamt wird durch die Gasleitvorrichtung 21 erreicht, dass der Brennkammer 11 über die zweiten Bohrungen 40, 40' ein Brennstoff-Luft-Gemisch zuführbar ist, das in der Brennkammer 11 gezündet und dort verbrannt wird, wobei die in der Brennkammer 11 entstehenden Abgase dann nach dem Prinzip eines Gegenstromwärmetauschers über die Abgasabfuhrkanäle 30 durch den Brennerkörper 10 zurückgeführt werden und dabei das durch den Brennerkörper 10 mittels der Gaszufuhrkanäle zugeführte Brennstoff-Luft-Gemisch vorwärmen, bevor sie schließlich als Abgas über die ersten Bohrungen 41, 41' und die Abgasabführung 50 abgeführt werden.

Im Übrigen ist in Figur 2 bzw. 3b zu erkennen, dass die Trennstege 20 der Gaszufuhrelemente 25 bzw. der Abgasabfuhrelemente 24 in Draufsicht jeweils eine Breite aufweisen, die größer oder gleich der größten Weite b der Kanäle 12 ist. Dadurch wird erreicht, dass die Abgasabfuhrkanäle 30 und die Gaszufuhrkanäle zumindest nahezu gasdicht voneinander getrennt sind und nicht einem Kanal zwei unterschiedlicher Gase zugeführt werden.

Die Figuren 3a bis 3c erläutern in Verbindung mit den Figuren 5a bis 5c ein alternatives Ausführungsbeispiel zu Realisierung der Gasleitvorrichtung 21. Dieses unterscheidet sich von dem ersten Ausführungsbeispiel dadurch, dass neben Abgasabfuhrelementen 24 nunmehr separate Luftzufuhrelemente 28 und Brennstoffzufuhrelemente 29 vorgesehen sind, so dass über die Luftzufuhrelemente 28 und Brennstoffzufuhrelemente 29 der Brennerkammer 11 separat Luft und ein Brenngas zuführbar ist. Insbesondere ist in Figur 3b dargestellt, dass sich Abgasabfuhrbereiche 22 periodisch mit Luftzufuhrbereichen 26 und diesen benachbarten Brennstoffzufuhrbereichen 27 abwechseln. Ansonsten ist der Aufbau der Abgasabfuhrelemente 24 bzw. der Luftzufuhrelemente 25 und der Brennstoffzufuhrelemente 29 im Wesentlichen analog dem ersten Ausführungsbeispiel.

Insbesondere weist das Abgasabfuhrelement 24 gemäß Figur 5a drei Bohrungen in Form der zweiten Bohrung 40, einer dritten Bohrung 42 und der geöffneten ersten Bohrung 41 auf. Das benachbarte Luftzufuhrelement 28 gemäß Figur 5b weist dann ebenfalls drei Bohrungen, nämlich die erste Bohrung 41', die geöffnete zweite Bohrung 40' und die dritte Bohrung 42 auf. Das schließlich dem Luftzufuhrelement 28 benachbarte Brennstoffzufuhrelement 29 hat dann ebenfalls drei Bohrungen, nämlich die erste Bohrung 41', die zweite Bohrung 40 und eine geöffnete dritte Bohrung 42'. Die geöffnete dritte Bohrung 42' ist weiter, wie bereits erläutert, erneut gasdurchgängig mit einem Brennstoffzufuhrbereich 27 des Brennstoffzufuhrelementes 29 in Form einer Ausnehmung verbunden. Beim Zusammensetzen der Abgasabfuhrelemente 24, der Luftzufuhrelemente 28 und der Brennstoffzufuhrelemente 29 zu der Gasleitvorrichtung 21 in Form eines Blockes und dem Aufsetzen dieses Blockes auf die Stirnseite des Brennerkörpers 10 entsteht somit eine Struktur gemäß Figur 3c, wobei den einzelnen Kanälen 12 in dem Brennerkörper 10 nunmehr durch die Gasleitvorrichtung 21 unterschiedliche Funktionen aufgeprägt sind. So dient ein erster Teil der Kanäle 12 nun als abgasführende Abgasabfuhrkanäle 30, ein zweiter Teil als luftführende Luftzufuhrkanäle 31 und ein dritter Teil als brenngasführende Brennstoffzufuhrkanäle 32.

Die Figur 3c zeigt dazu einen Ausschnitt aus Figur 3a im Bereich der Gasleitvorrichtung 21, wobei zusätzlich die innerhalb des Brennerkörpers 10 verlaufenden Kanäle 12 im Schnitt dargestellt sind. In Figur 3c ist weiter zu erkennen, dass durch die Wahl der Breite der Trennwände 20 gewährleistet ist, dass den Kanälen gleicher Funktion jeweils definiert ein zugehöriges Gas zugeordnet ist. Zudem ist in Figur 3c auch dargestellt, dass durch die Wahl der Breite der Trennwände 20 durchaus gelegentlich auch geschlossene Kanäle 34 auftreten können, was die Funktion des Brenners jedoch nicht beeinträchtigt.

Weiter sei betont, dass die zweite Bohrung 40 und die geöffnete zweite Bohrung 40', die erste Bohrung 41' und die geöffnete erste Bohrung 41, sowie die dritte Bohrung 42 und die geöffnete dritte Bohrung 42' aller Elemente 25, 28, 29 der Gasleitvorrichtung 21 gemäß Figur 3a jeweils auf einer Flucht liegen, und somit jeweils mittels einer einzigen Durchbohrung erzeugbar sind.

Zudem steht die zweite Bohrung 40 und die geöffnete zweite Bohrung 40' im erläuterten Beispiel gemäß Figur 3a mit einer nicht dargestellten Brennstoffzuführung, die erste Bohrung 41' und die geöffnete erste Bohrung 41 mit einer nicht dargestellten Abgasabführung und die dritte Bohrung 42 und die geöffnete dritte Bohrung 42' mit einer nicht dargestellten Luftzuführung in Verbindung.

In beiden vorstehend erläuterten Ausführungsbeispielen ist offensichtlich die konkrete Form der Gasleitvorrichtung 21 in einfacher Weise an die jeweiligen Erfordernisse des Brenners bzw. die Form des Brennerkörpers 10 anpassbar. So kann der Brennerkörper 10 sowohl zylindrisch als auch quaderförmig ausgebildet sein. Zudem kann auch die Form des Brennerkörpers 10 an die Form der Gasleitvorrichtung 21 angepasst sein.

Insbesondere ist es möglich, dass die Elemente 24, 25, 28, 29 alternativ zu der erläuterten Quaderform auch eine ringförmige oder halbkreisförmige Grundstruktur mit entsprechenden, ringförmigen oder halbkreisförmigen Ausnehmungen aufweisen, so dass eine periodische Abfolge von schlitzförmigen, zeilenförmigen, ringförmigen oder halbkreisförmigen Gaszufuhrbereichen 23, 26, 27 und Abgasabfuhrbereichen 22 entsteht.

Weiter sei erwähnt, dass die Kanäle 12, 30, 31, 32, 34, die parallel innerhalb des Brennerkörpers 10 verlaufen, unmittelbar benachbart und durch dünne Wände zumindest weitgehend gasdicht voneinander getrennt sind.

Die typische Größe eines Kanals 12 liegt im Querschnitt bei 1x1 mm bis 2x2 mm. Die typische Größe des Brennerkörpers 10 beträgt ca. 15 x 15 cm bei einer Höhe von ca. 30 cm. Als Material für den Brennerkörper 10 in Form eines keramischen Wabenkörpers eignet sich besonders Aluminiumoxid. Daneben kommen auch andere, temperaturstabile und chemisch nicht reaktive keramische Werkstoffe oder thermisch beständige Metalle in Frage. Zu weiteren, an sich bekannten Details zu einem derartigen rekuperativen Brenner sei auf die Anmeldung DE 198 60 460.2 verwiesen.

Die Figuren 6a und 6b sowie 7a bis 7c erläutern zwei weitere Ausführungsbeispiele zur Realisierung einer Gasleitvorrichtung 21, die auf den Brennerkörper 10 aufgesetzt ist.

Im Einzelnen zeigt die Figur 6a eine Gasleitvorrichtung 21 im brennerkörperseitiger Draufsicht, wobei die Gasleitvorrichtung 21 eine Gasleitplatte 47, ein Gaszufuhrteil 46 und ein diesem gegenüber angeordnetes Abgasabfuhrteil 45 aufweist. Die Figur 6b zeigt einen Schnitt durch Figur 6a entlang der eingezeichneten Schnittlinie. Dort ist erkennbar, dass die Gasleitplatte 47 zeilenförmige Ausnehmungen aufweist, die abwechselnd die Abgasabfuhrbereiche 22 und die Gaszufuhrbereiche 23 bilden, und die durch die Trennstege 20 voneinander getrennt sind. Die Gasleitplatte 47 ist dazu beispielsweise in Form einer metallischen Platte ausgeführt, die mit zeilenförmigen Ausfräsungen versehen ist. Das Gaszufuhrteil 46, das seitlich an der Gasleitplatte 47 angebracht ist und mit der Gaszuführung 51 in Verbindung steht, sorgt dafür, dass den Gaszufuhrbereichen 23 ein Brennstoff-Luft-Gemisch zuführbar ist, das dann durch die dadurch definierten Gaszufuhrkanäle in dem Brennerkörper 10 zu der Brennkammer 11 geleitet, dort verbrannt und schließlich durch die Abgasabfuhrkanäle 30 in die Abgasabfuhrbereiche 22 gelangt, die selbst wiederum mit dem Abgasabfuhrteil 45 verbunden sind, das mit der Abgasabführung 50 in Verbindung steht.

Insbesondere ist gemäß Figur 6a dargestellt, dass die Abgasabfuhrbereiche 22 nur mit der Abgasabführung 50 und die Gaszufuhrbereiche 23 nur mit der Gaszuführung 51 in Verbindung stehen.

Zur Gewährleistung der Verbindung des Abgasabführteils 45 mit den Abgasabfuhrbereichen 22 weist dieses zudem an entsprechender Stelle geeignete Bohrungen auf. Gleiches gilt auch für das Gaszufuhrteil 46, um die Verbindungen der Gaszufuhrbereiche 23 zu der Gaszuführung 51 zu erreichen.

Insgesamt prägt die Gasleitvorrichtung 21 durch die in der erläuterten Weise ausgeführte Gasleitplatte 47 den Kanälen 12 ihre Funktion hinsichtlich Gaszufuhr und Abgasabfuhr ein.

Die Figur 7a zeigt die Gasleitvorrichtung 21 in Form einer einstückigen Gasleitscheibe 48, die mit konzentrischen, ringförmigen oder schlitzförmigen Ausnehmungen versehen ist, die abwechselnd Gaszufuhrbereiche 23 und Abgasabfuhrbereiche 22 bilden, die durch Trennstege 20 voneinander separiert sind. Die Breite der Trennstege 20 ist erneut zumindest gleich oder größer als die größte Weite b der Kanäle 12 in dem Brennkörper 10. Gemäß Figur 7a ist weiter vorgesehen, dass die Gasleitscheibe 48 auf zwei von ihrem Mittelpunkt ausgehenden, auf einer Linie liegenden Strahlen angeordnete stegförmige Trennstücke 55, 56 aufweist, die jeweils die schlitzförmigen oder ringförmigen Ausnehmungen in der Gasleitscheibe 48 unterbrechen. Die Höhe der Trennstücke 55, 56 entspricht dabei der Tiefe der Ausnehmungen. Weiter ist vorgesehen, dass diese Trennstücke 55, 56 beim Unterbrechen der Ausnehmungen abwechselnd eine erste und eine größere zweite Breite aufweisen. Schließlich ist vorgesehen, dass die Gasleitscheibe 48 zwei einander gegenüber liegende Durchbohrungen 53, 54 aufweist, wobei eine erste Durchbohrung 53 entlang des ersten, von dem Mittelpunkt der Gasleitscheibe 48 ausgehenden Strahls durch die Trennstücke 55, 56, und eine zweite Durchbohrung 54 entlang des zweiten Strahls durch die Trennstücke 55, 56 verläuft.

Die erste bzw. die zweite Durchbohrung 53, 54 haben bevorzugt weiter einen gleichen Durchmesser, der so bemessen ist, dass er größer als die erste und kleiner als die zweite Breite der Trennstücke 55, 56 ist. Auf diese Weise wird erreicht, dass die schmäleren Trennstücke 55 durch die Durchbohrung seitlich geöffnet werden, während die breiteren Trennstücke 56 lediglich durchbohrt, jedoch nicht geöffnet werden.

In Figur 7a ist dargestellt, dass die erste Durchbohrung 53 mit der Abgasabführung 50 und die zweite Durchbohrung 54 mit der Gaszuführung 51 in Verbindung steht, so dass insgesamt aus den Abgasabfuhrbereichen 22 über die erste Durchbohrung 53 in definierter Weise das Abgas abführbar ist, während mittels der zweiten Durchbohrung 54 in definierter Weise den Gaszufuhrbereichen 23 ein Brennstoff-Luft-Gemisch zuführbar ist.

In Figur 7b sind der Trennsteg 20 und das darin befindliche Bohrloch 52 von der zweiten Durchbohrung 54 erkennbar.

Die Figur 7c zeigt, dass neben den Trennstegen 20 auch ein geschlossenes Trennstück 56 mit einem darin befindlichen Bohrloch 52 von der zweiten Durchbohrung 54 sichtbar ist. Weiter ist in Figur 7c dargestellt, dass die Ausnehmungen in der Gasleitvorrichtung 21 in diesem Fall Abgasabfuhrbereiche 22 sind.

## Patentansprüche

1. Brenner mit einer Abgaswärmerückgewinnung nach dem Prinzip eines Gegenstromwärmetauschers mit einem Brennerkörper (10) und einer Brennkammer (11), wobei der Brennerkörper (10) innerhalb des Brennerkörpers (10) verlaufende, mit der Brennkammer (11) in Verbindung stehende, insbesondere parallele Kanäle (12, 30, 31, 32, 34) aufweist, von denen ein erster Teil als gasführende, zu der Brennkammer (11) hin verlaufende Gaszufuhrkanäle (31, 32) und ein zweiter Teil als abgasführende, von der Brennkammer (11) weg verlaufende Abgasabfuhrkanäle (30) einsetzbar ist, **dadurch gekennzeichnet, dass** der Brennerkörper (10) mit einer Gasleitvorrichtung (21) in Verbindung steht, die Gaszufuhrbereiche (23, 26, 27) und Abgasabfuhrbereiche (27) aufweist, wobei die Gaszufuhrbereiche (23, 26, 27) und die Abgasabfuhrbereiche (22) den Kanälen (12, 30, 31, 32, 34) deren Funktion hinsichtlich Gaszufuhr und Abgasabfuhr einprägen.

2. Brenner nach Anspruch 1, **dadurch gekennzeichnet, dass** die in dem Brennerkörper (10) verlaufenden Kanäle (12) im Querschnitt des Brennerkörpers (10) eine ungeordnete, insbesondere keinem regelmäßigen geometrischen Muster unterworfene Struktur aufweisen.

3. Brenner nach Anspruch 1, **dadurch gekennzeichnet, dass** die Gasleitvorrichtung (21) eine Mehrzahl von Gaszufuhrelementen (25, 28, 29) und eine Mehrzahl von Abgasabfuhrelementen (24) aufweist, die zu einem Block zusammengefasst sind, wobei in den Gaszufuhrelementen (25, 28, 29) die Gaszufuhrbereiche (23, 26, 27) in Form von Ausnehmungen und in den Abgasabfuhrelementen (24) die Abgasabfuhrbereiche (22) in Form von weiteren Ausnehmungen eingearbeitet sind.

4. Brenner nach Anspruch 3, **dadurch gekennzeichnet, dass** die Ausnehmungen mittels einer geöffneten Bohrung (40', 42') mit der Gaszuführung (51) und die weiteren Ausnehmungen mittels einer weiteren geöffneten Bohrung (41) mit der Abgasabführung (50) verbunden sind.

5. Brenner nach Anspruch 3, **dadurch gekennzeichnet, dass** die Gaszufuhrelemente (25, 28, 29) und die Abgasabfuhrelementen (24) jeweils derart benachbart auf dem Brennerkörper (10) angeordnet sind, dass eine periodische Abfolge der Ausnehmungen für die Gaszufuhrbereiche (23, 26, 27) und die Abgasabfuhrbereiche (22) entsteht, wobei insbesondere ein Abgasabfuhrelement (24), abgesehen von Randbereichen der Gasleitvorrichtung (21), stets von zwei Gaszufuhrelementen (25, 28, 29) benachbart ist.

6. Brenner nach Anspruch 5, **dadurch gekennzeichnet, dass** Luftzufuhrelemente (28), Brennstoffzufuhrelemente (29) und Abgasabfuhrelemente (24) vorgesehen sind, die abwechselnd periodisch benachbart angeordnet sind.

7. Brenner nach Anspruch 3, **dadurch gekennzeichnet, dass** die Gaszufuhrbereiche (23, 26, 27) und Abgasabfuhrbereiche (22) jeweils schlitzförmig, zeilenförmig oder ringförmig ausgebildet sind und mittels der Gaszufuhrelemente (25, 28, 29) und der Abgasabfuhrelemente (24) über Trennwände oder Trennstege (20) zumindest weitgehend gasdicht voneinander getrennt sind, wobei zusätzlich die Trennwände oder Trennstege (20) in Draufsicht auf den Brennerkörper (10) eine Breite aufweisen, die größer oder gleich der größten Weite (b) der Kanäle (12, 30, 31, 32, 34) ist.

8. Brenner nach Anspruch 1, **dadurch gekennzeichnet, dass** die Gasleitvorrichtung (21) mit einem Gaszufuhrteil (46) verbunden ist, mit dem den Gaszufuhrbereichen (23, 26, 27), die sich mit benachbarten Abgasabfuhrbereichen (22) abwechseln, ein Brenngas-Luft-Gemisch zuführbar ist, oder mit dem nur den Gaszufuhrbereichen (23, 26, 27), die in Form von Luftzufuhrbereichen (26) und Brennstoffzufuhrbereichen (27) ausgebildet sind und sich mit benachbarten Abgasabfuhrbereichen (22) periodisch abwechseln, jeweils entweder Luft oder ein Brenngas zuführbar ist.

9. Brenner nach Anspruch 1, **dadurch gekennzeichnet, dass** die Gasleitvorrichtung (21) mit einem Abgasabfuhrteil (45) verbunden ist, das direkt nur mit den Abgasabfuhrbereichen (22) der Gasleitplatte (47) verbunden ist, und mit dem, ausgehend von den Abgasabfuhrbereichen (22), das in dem Brenner entstehende Abgas abführbar ist.

10. Brenner nach Anspruch 1, **dadurch gekennzeichnet, dass** die Gasleitvorrichtung (21) eine Gasleitscheibe (48) mit konzentrischen Trennstegen (20) und in die Gasleitschiebe (48) eingelassenen, von den Trennstegen (20) benachbarten konzentrischen ringförmigen oder schlitzförmigen Ausnehmungen versehen ist, wobei die Ausnehmungen teilweise Gaszufuhrbereiche (23, 26, 27) und teilweise Abgasabfuhrbereiche (22) bilden.

11. Brenner nach Anspruch 9, **dadurch gekennzeichnet, dass** die Gasleitscheibe (48) auf mindestens zwei von ihrem Mittelpunkt ausgehenden, insbesondere auf einer Linie liegenden, von einer ersten Durchbohrung (53) und einer zweiten Durchbohrung (54) gebildeten Strahlen angeordnete stegförmige Trennstücke (55, 56) aufweist, die jeweils die konzentrischen schlitzförmigen oder ringförmigen Ausnehmungen in der Gasleitscheibe (48) unterbrechen, wobei die Höhe der Trennstücke (55, 56) der Tiefe der Ausnehmungen entspricht und die Trennstücke (55, 56) bei Draufsicht auf die Gasleitscheibe (48) beim Unterbrechen der Ausnehmungen abwechselnd eine erste Breite und eine größere -zweite Breite aufweisen, und wobei der Durchmesser der ersten und der zweiten Durchbohrung (53, 54) größer als die erste und kleiner als die zweite Breite ist, wobei die erste Durchbohrung (53) nur mit der Abgasabführung (50) und den Abgasabfuhrbereichen (22) gasdurchlässig verbunden ist, und dass die zweite Durchbohrung nur mit der Gaszuführung (51) und den Gaszufuhrbereichen (23, 26, 27) gasdurchlässsig verbunden ist.
